# EUROPÄISCHE PATENTANMELDUNG

(11) **EP 3 147 152 A1**
(43) Veröffentlichungstag der Anmeldung: **29.03.2017**
(21) Anmeldenummer: 16183656.4
(22) Anmeldetag: 11.08.2016
(51) Int. Cl.: B60L 5/19, B62D 15/02, B60W 30/12

(54) **NICHT SCHIENENGEBUNDENES FAHRZEUG**

(30) Priorität: 28.09.2015 DE 102015218579; 26.10.2015 DE 102015220868
(71) Anmelder: Siemens Aktiengesellschaft, 80333 München (DE)
(72) Erfinder: Bühs, Florian, 10777 Berlin (DE); Gerstenberg, Frank, 10409 Berlin (DE); Lehmann, Michael, 91054 Erlangen (DE); Sänger, Göran, 12557 Berlin (DE)

(57) **Zusammenfassung**

Die Erfindung betrifft ein nicht schienengebundenes, elektrisch oder hybridelektrisch getriebenes Fahrzeug. Es umfasst einen Stromabnehmer zur Einspeisung von elektrischer Traktionsenergie aus einer Oberleitungsanlage. Der Stromabnehmer weist eine anheb- und absenkbare Schleifleistenanordnung auf, die mit einem über einem Fahrstreifen verlaufenden Fahrdraht der Oberleitungsanlage in Schleifkontakt bringbar ist. Zur Aufrechterhaltung des Schleifkontaktes bei Lenkbewegungen ist die Schleifleistenanordnung quer zu einer Fahrtrichtung verschwenkbar. Erfindungsgemäß umfasst das Fahrzeug Begrenzungsmittel zur wenigstens einseitigen Querbegrenzung des Schwenkbereichs der Schleifleistenanordnung im Wesentlichen auf Fahrzeugbreite und ein Fahrerassistenzsystem zur Unterstützung eines Fahrers bei der Einhaltung einer virtuellen Fahrspur, die innerhalb des markierten Fahrstreifens liegt und eine geringere Spurbreite als der Fahrstreifen aufweist. Dabei sind die Spurbreite und der Schwenkbereich derart bemessen, dass bei Einhaltung der Fahrspur ein Schleifkontakt der Schleifleistenanordnung zum Fahrdraht aufrechterhaltbar ist. Hierdurch wird die Betriebssicherheit hinsichtlich der Kollisionsgefahr des Stromabnehmers mit Teilen anderer Fahrzeuge oder der Oberleitungsanlage erhöht.

## Beschreibung

Die Erfindung bezieht sich auf ein nicht schienengebundenes Fahrzeug nach dem Oberbegriff des Patentanspruches 1.

Ein derartiges Fahrzeug ist beispielsweise aus der Offenlegungsschrift DE 10 2011 076 623 A1 bekannt. Es umfasst einen eine Fahrzeugbreite aufweisenden Fahrzeugaufbau und einen Stromabnehmer zur Einspeisung von Traktionsenergie aus einer zweipoligen Oberleitung. Der Stromabnehmer weist zwei Tragarme auf, deren oberleitungsseitige Enden gelenkig mit einem quer zu einer Fahrzeuglängsachse liegenden Scheitelrohr verbunden ist. Das Scheitelrohr trägt eine Schleifleistenanordnung in Form von zwei um eine Scheitelrohrachse drehbar gelagerten Wippen, die jeweils zwei hintereinander angeordnete Schleifleisten aufweisen. Mit ihren fahrzeugseitigen Enden sind die Tragarme derart am Fahrzeugaufbau angelenkt, dass die Schleifleistenanordnung zwischen einer abgesenkten Ruheposition und einer angehobenen Kontaktposition höhenverstellbar und zwischen zwei seitlichen Auslenkpositionen quer zur Fahrzeuglängsachse schwenkbar sind. Eine Ist-Lage des Fahrzeugs relativ zu den Fahrdrähten wird mittels eines Lagesensors erfasst, der als fahrzeugfeste Videokamera ausgebildet ist. Das Fahrzeug weist eine Regeleinrichtung auf, die aus einem Vergleich der erfassten Ist-Lage mit einer vorgegebenen Soll-Lage des Fahrzeugs relativ zu den Fahrdrähten eine Stellgröße bestimmt. Die Regeleinrichtung steuert entsprechend der bestimmten Stellgröße einen Stellantrieb zum seitlichen Verschwenken der Schleifleistenanordnung an.

Aufgrund des vorgegebenen Sicherheitsabstandes zwischen den als Hin- und Rückleiter der Oberleitung ausgebildeten und im Wesentlichen parallel zueinander verlaufenden Fahrdrähten sowie der vorgegebenen Mindestlänge der Schleifleisten zur Ausbildung eines ausreichenden Arbeitsbereichs für deren Kontakthaltung zu den Fahrdrähten nimmt der bekannte Stromabnehmer als solcher bereits eine Stromabnehmerbreite ein, die deutlich größer ist als die maximal zulässige Fahrzeugbreite des Fahrzeugaufbaues von 2,55 m ohne Außenspiegel. Ein elektrifizierter Fahrstreifen einer Fahrbahn, beispielsweise ein äußerer Fahrstreifen einer mehrstreifigen Autobahn, kann bis zu 3,75 m breit sein. Damit das Fahrzeug auf dem ganzen Fahrstreifen Kontakt zur Oberleitung halten kann, muss die Schleifleistenanordnung zu beiden Seiten weit über die Fahrzeugbreite hinaus ausschwenken können, so dass eine Kollisionsgefahr mit dem Gegenverkehr, mit überholten und überholenden Fahrzeugen wie auch mit der Infrastruktur, insbesondere mit zu nah am Fahrbahnrand stehenden Masten besteht.

Der Erfindung liegt daher die Aufgabe zugrunde, ein Fahrzeug der eingangs genannten Art bereitzustellen, welches eine erhöhte Betriebssicherheit hinsichtlich der Kollisionsgefahr seines Stromabnehmers aufweist.

Die Aufgabe wird nach der Erfindung durch ein gattungsgemäßes Fahrzeug mit den im kennzeichnenden Teil des Patentanspruches 1 angegebenen Merkmalen gelöst. Das nicht schienengebundene, elektrisch oder hybridelektrisch getriebene Fahrzeug umfasst einen Stromabnehmer zur Einspeisung von elektrischer Traktionsenergie aus einer Oberleitungsanlage. Der Stromabnehmer weist eine anheb- und absenkbare Schleifleistenanordnung auf, die mit einem über einem Fahrstreifen verlaufenden Fahrdraht der Oberleitungsanlage in Schleifkontakt bringbar ist. Zur Aufrechterhaltung des Schleifkontaktes bei Lenkbewegungen ist die Schleifleistenanordnung quer zu einer Fahrtrichtung verschwenkbar. Erfindungsgemäß umfasst das Fahrzeug Begrenzungsmittel zur wenigstens einseitigen Querbegrenzung des Schwenkbereichs der Schleifleistenanordnung im Wesentlichen auf Fahrzeugbreite. Die Begrenzungsmittel sind vorzugsweise durch einen gegenständlichen Anschlag zur Begrenzung des Schwenkbereichs gebildet. Je nach Ausgestaltung kann der Schwenkbereich in nur eine oder in beide Richtungen begrenzt sein. Desweitern umfasst das Fahrzeug erfindungsgemäß ein Fahrerassistenzsystem zur Unterstützung eines Fahrers bei der Einhaltung einer virtuellen Fahrspur, die innerhalb des markierten Fahrstreifens liegt und eine geringere Spurbreite als der Fahrstreifen aufweist. Dabei sind die Spurbreite und der Schwenkbereich derart bemessen, dass bei Einhaltung der Fahrspur ein Schleifkontakt der Schleifleistenanordnung zum Fahrdraht aufrechterhaltbar ist. Der Fahrer wird mittels des Fahrerassistenzsystems beeinflusst, auf einer virtuellen Fahrspur innerhalb des elektrifizierten Fahrstreifens zu fahren, der eine geringere Breite als der Fahrstreifen hat. Die Fahrstreifenbreite ist für eine Fahrweise ohne Fahrerassistenzsystem ausgelegt, die mit Fahrerassistenzsystem einhaltbare Fahrspur kann jedoch weniger breit vorgegeben werden. Damit wird erreicht, dass das Fahrzeug bezüglich der Oberleitung seitlich weniger starke Fahrabweichungen ausführt. Dies erlaubt die seitliche Begrenzung des Schwenkbereichs des Stromabnehmers, ohne dass es zu einem Kontaktverlust von der Oberleitung kommen kann, solange das Fahrzeug in der virtuellen Fahrspur gehalten wird. Ebenso kann die Breite der Schleifleistenanordnung des Stromabnehmers im Vergleich zu bekannten Stromabnehmern verringert werden, beispielsweise auf Spiegelbreite des Fahrzeugs. Die Fahrdrähte der zweipoligen Oberleitungsanlage verlaufen beispielsweise parallel und symmetrisch zur Fahrstreifenmitte, können aber auch zur Verschleißminimierung der Schleifleistenanordnung im Zickzack verlegt sein.

In einer vorteilhaften Ausgestaltung des erfindungsgemäßen Fahrzeugs ist die virtuelle Fahrspur näher an eine erste Seitenmarkierung des Fahrstreifens als an dessen zweite Seitenmarkierung gelegt, wobei der seitliche Schwenkbereich der Schleifleistenanordnung auf der der ersten Seitenmarkierung zugeordneten Fahrzeugseite begrenzt ist. Ist beispielsweise der linke Fahrstreifen einer Autobahn elektrifiziert, wobei Masten der Oberleitungsanlage sehr nah an der linken Seitenmarkierung des Fahrstreifens stehen und damit ein Kollisionsrisiko darstellen, so kann die virtuelle Fahrspur außermittig links im Fahrstreifen liegen, so dass das Fahrerassistenzsystem den Fahrer zwingt, ständig links von der Mitte zu fahren. Der Stromabnehmer weist dabei einen links auf Spiegelbreite begrenzten Schwenkbereich auf und ist im Mittel leicht nach rechts ausgeschwenkt. Dadurch ergibt sich dann wieder ein Arbeitsbereich der Schleifleisten mit gleichmäßiger Abnutzung in beide Richtungen. Entgegen der Intuition, sich vom Gefahrenbereich fern zu halten, wird in diesem Ausführungsbeispiel also vorgeschlagen, sich dem Gefahrenbereich zu nähern. Die Kollisionsgefahr ist durch die harte Begrenzung der Schwenkbewegung nach links entschärft. Ein auf der linken Fahrzeugseite sitzender Fahrer kann seitliche Abstände seines Fahrzeugs zu links von diesem liegenden Hindernissen sehr gut einschätzen und sein Fahrzeug entsprechend lenken. Nach rechts hingegen könnte der Schwenkbereich des Stromabnehmers gegebenenfalls sogar erweitert werden.

Vorzugsweise ist bei dem erfindungsgemäßen Fahrzeug der seitliche Schwenkbereich der Schleifleistenordnung zusätzlich derart begrenzt, dass die Schleifleistenanordnung nicht über die zweite Seitenmarkierung des Fahrstreifens hinwegschwenkt. Hierdurch wird gewähreistet, dass dem Stromabnehmer - im obigen Beispiel gesprochen - nach rechts ein derart erweiterter Schwenkbereich zur Verfügung steht, ohne dass eine Kollision mit einem Objekt zu befürchten ist, welches auf dem rechts benachbarten Fahrstreifen steht oder fährt.

In einer weiteren vorteilhalten Ausführungsform des erfindungsgemäßen Fahrzeugs sind Breite und/oder Seitenlage der virtuellen Fahrspur innerhalb des Fahrstreifens und/oder die seitliche Begrenzung der Schwenkbewegung der Schleifleistenanordnung variabel in Abhängigkeit der aktuellen Fahrzeugposition vorgebbar. Einschränkungen der Fahrstreifenausnutzung und Begrenzungen des Schwenkbereichs können auf die Orte oder Abschnitte der Fahrstrecke beschränkt werden, wo Hindernisse seitlich des Fahrstreifens dies tatsächlich erfordern und ein zu geringer Abstand zu diesen vermieden werden muss. So können Hindernisse entlang einer elektrifizierten Fahrstrecke gegebenenfalls in unregelmäßigen Abständen auf wechselnden Seiten des Fahrstreifens vorliegen, die jeweils eine Veränderung der virtuellen Fahrspur und Begrenzung des Schwenkbereichs erfordern.

In einer bevorzugten Ausgestaltung umfasst das erfindungsgemäße Fahrzeug Sensormittel zur Erfassung einer seitlichen Fahrabweichung aus der Spurmitte der virtuellen Fahrspur, wobei das Fahrerassistenzsystem Ausgabemittel zur Ausgabe einer Fahrerinformation über die Fahrabweichung aufweist. Die Sensormittel können direkt oder indirekt die aktuelle seitliche Abweichung des Fahrzeugs von der Fahrspurmitte erfassen und diese Fahrabweichung dem Fahrerassistenzsystem für die Ausgabe einer optisch und/oder akustisch und/oder haptisch ausgebildeten Fahrerinformation über entsprechende Ausgabemittel zuführen. Optische Ausgabemittel können durch eine Anzeige auf einem Bildschirm oder durch Signalleuchten auf dem Armaturenbrett des Fahrzeugs gebildet sein. Akustische Ausgabemittel können durch Lautsprecher ausgebildet sein, über die Sprachmitteilungen oder Signaltöne ausgegeben werden. Haptische Ausgabemittel können durch Vibrationsgeber im Lenkrad oder im Fahrersitz des Fahrzeugs gebildet sein. Die Fahrerinformation kann eine Warnung bei kritischer Fahrzeugannäherung an eine Seitenbegrenzung der virtuellen Fahrspur sein, beispielsweise ein Unterschreiten einer vordefinierten Abstandsschwelle zur Seitenbegrenzung der Fahrspur.

Vorzugsweise sind die Ausgabemittel des Fahrerassistenzsystems eines erfindungsgemäßen Fahrzeugs dazu ausgebildet, eine variierende Fahrerinformation in Abhängigkeit der Größe der Fahrabweichung auszugeben. Die Fahrerinformation kann umso eindringlicher ausgestaltet werden, je näher das Fahrzeug aus der Spurmitte hin an eine Seitenbegrenzung der virtuellen Fahrspur kommt. So kann die Warnung an den Fahrer durch zunehmende Laut-, Licht- oder Vibrationsstärke, durch zunehmende Wiederholfrequenz von Ton-, Licht- oder Vibrationssignalen, durch Farb-, Tonhöhe- oder Vibrationsfrequenzwechsel oder wechselnde Inhalte von Sprachmitteilungen oder Bildschirmanzeigen abgestuft werden. Der Fahrer wird hierdurch umso eindringlicher zur Vornahme einer erforderlichen Lenkbewegung beeinflusst, je mehr ein Verlassen der virtuellen Fahrspur droht.

In einer bevorzugten Ausführungsform des erfindungsgemäßen Fahrzeugs weisen die Ausgabemittel an beiden Fahrzeugseiten angeordnete Lautsprecher auf und sind dazu ausgebildet, die Fahrerinformation über Lautsprecher derjenigen Fahrzeugseite auszugeben, in deren Richtung die erfasste Fahrabweichung liegt. Hierdurch ist es dem Fahrer auf besonders intuitive Weise möglich die ausgegebene Fahrerinformation aufzunehmen und in eine entsprechende Lenkbewegung umzusetzen. Diese Art der seitenabhängigen Ausgabe ist auch für optisch oder haptische ausgebildete Fahrerinformationen möglich.

In einer vorteilhaften Ausgestaltung des erfindungsgemäßen Fahrzeugs sind die Sensormittel dazu ausgebildet, die aktuelle seitliche Fahrabweichung anhand der Relativlage des Fahrzeugs zu Einrichtungen der Oberleitungsanlage zu erfassen. In erster Linie kommen hier die am Fahrzeugaufbau angeordnete Fernbereichssensorik und/oder die am Stromabnehmer angeordnete Nahbereichssensorik zur Detektion der Fahrdrähte in Betracht. Bei vorgegebener Definition der virtuellen Fahrspur in Bezug auf die Fahrdrähte der Oberleitungsanlage kann über die Relativlage des Fahrzeugs zu den Fahrdrähten auf eine Fahrabweichung des Fahrzeugs aus der Spurmitte der Fahrspur geschlossen werden. Gleichermaßen kann die virtuelle Fahrspur über bekannte Positionen von Masten und Auslegern der Oberleitungsanlage definiert werden. Ebenso können aktive oder passive Markierungen, zusätzliche Markierungen oder Objekte mit einem festen Bezug zur Oberleitungsanlage die virtuelle Fahrspur definieren.

In einer weiteren vorteilhaften Ausführungsform des erfindungsgemäßen Fahrzeugs sind die Sensormittel dazu ausgebildet, die aktuelle seitliche Fahrabweichung anhand der Relativlage des Fahrzeugs zu Seitenmarkierungen des Fahrstreifens zu erfassen. Insbesondere Video-, Radar- und Lidarsensoren können die Fahrstreifenmarkierungen erfassen, bezüglich derer die virtuelle Fahrspur definierbar ist. Die erfasste Position des Fahrzeugs bezüglich der Markierungen des Fahrstreifens ermöglicht so die Bestimmung der Fahrabweichung des Fahrzeugs innerhalb der virtuellen Fahrspur.

Weiterhin können die Sensormittel Beschleunigungssensoren am Fahrzeug und/oder Drehgeschwindigkeitssensoren an den Reifen des Fahrzeugs umfassen und elektronische Kartendaten und Positionssignale von Satellitennavigationssystemen zur Ermittlung der Fahrabweichung verwenden.

In einer weiteren bevorzugten Ausgestaltung des erfindungsgemäßen Fahrzeugs weist die Schleifleistenanordnung seitlich abstehende Isolationshörner auf, die eine Sollbruchstelle aufweisen. Isolationshörner sind in Verlängerung der Schleifleisten an den seitlichen Enden von Schleifleistenhaltern angeordnet und bezüglich des Schleifleistenverlaufs schräg nach unten gebogen. Ebenso wie ein umklappbarer Seitenspiegel verhindert ein an der Sollbruchstelle abgebrochenes Isolationshorn größeren Schaden an der Schleifleistenanordnung im Kollisionsfall und erhöht damit die Betriebssicherheit des Fahrzeugs.

Vorzugsweise weist die Schleifleistenanordnung des Stromabnehmers eines erfindungsgemäßen Fahrzeugs eine Detektionseinrichtung auf, die dazu ausgebildet ist, ein Abbrechen eines Isolationshorns zu detektieren und eine automatische Absenkung der Schleifleistenanordnung auszulösen. Bei einer Kollision mit Bruch eines Isolationshorns wird hierdurch sichergestellt, dass der Fahrer diese Kollision erkennt und nicht einfach weiter fährt, sondern dass der Stromabnehmer mit Schleifleistenanordnung in eine sichere Ruheposition abgesenkt wird. Dazu kann der Luftkanal der automatischen Notabsenkung bis zur Sollbruchstelle mit der Notabsenkung verbunden sein und damit über das Sicherheitsrelais die Notabsenkung eingeleitet werden.

In einer weiteren bevorzugten Ausführungsform des erfindungsgemäßen Fahrzeugs ist ein Isolationshorn durch ein Fangseil gesichert. Zur weiteren Erhöhung der Betriebssicherheit wird ein abgebrochenes Isolationshorn nicht auf die Fahrbahn fallen gelassen, sondern hängt gesichert an einem Fangseil.

Insgesamt führen alle Maßnahmen zu einer hohen Wahrscheinlichkeit, die virtuelle Fahrspur mit dem Fahrzeug nicht zu verlassen und so den Kontakt zur Oberleitung aufrecht zu erhalten. Dabei wird der Stromabnehmer mit Schleifleistenanordnung so wenig wie möglich seitlich ausgeschwenkt. Bevorzugt werden die ohnehin vorhandenen Elemente der Fahrbahn- und Oberleitungsinfrastruktur zur Positionsermittlung für die Bestimmung der aktuellen Fahrabweichung verwendet. Die Erfindung greift nicht aktiv in die Lenkbewegung ein. Im Zweifelsfall erfolgt ein automatisches Abbügeln des Stromabnehmers. Ein gefährliches, weites Ausschwenken des Stromabnehmers zu den Seiten wird so verhindert.

## Patentansprüche

1. Nicht schienengebundenes, elektrisch oder hybridelektrisch getriebenes Fahrzeug, umfassend einen Stromabnehmer zur Einspeisung von elektrischer Traktionsenergie aus einer Oberleitungsanlage, wobei der Stromabnehmer eine anheb- und absenkbare Schleifleistenanordnung aufweist, wobei die Schleifleistenanordnung mit einem über einem Fahrstreifen verlaufenden Fahrdraht der Oberleitungsanlage in Schleifkontakt bringbar ist und wobei zur Aufrechterhaltung des Schleifkontaktes bei Lenkbewegungen die Schleifleistenanordnung quer zu einer Fahrtrichtung verschwenkbar ist, **gekennzeichnet durch** Begrenzungsmittel zur wenigstens einseitigen Querbegrenzung des Schwenkbereichs der Schleifleistenanordnung im Wesentlichen auf Fahrzeugbreite und **durch** ein Fahrerassistenzsystem zur Unterstützung eines Fahrers bei der Einhaltung einer virtuellen Fahrspur, die innerhalb des markierten Fahrstreifens liegt und eine geringere Spurbreite als der Fahrstreifen aufweist, wobei die Spurbreite und der Schwenkbereich derart bemessen sind, dass bei Einhaltung der Fahrspur ein Schleifkontakt der Schleifleistenanordnung zum Fahrdraht aufrechterhaltbar ist.

2. Fahrzeug nach Anspruch 1, wobei die virtuelle Fahrspur näher an eine erste Seitenmarkierung des Fahrstreifens als an dessen zweite Seitenmarkierung gelegt ist, und wobei der seitliche Schwenkbereich der Schleifleistenordnung auf der der ersten Seitenmarkierung zugeordneten Fahrzeugseite begrenzt ist.

3. Fahrzeug nach Anspruch 2, wobei der seitliche Schwenkbereich der Schleifleistenordnung zusätzlich derart begrenzt ist, dass die Schleifleistenanordnung nicht über die zweite Seitenmarkierung des Fahrstreifens hinwegschwenkt.

4. Fahrzeug nach einem der Ansprüche 1 bis 3, wobei Breite und/oder Seitenlage der virtuellen Fahrspur innerhalb des Fahrstreifens und/oder die seitliche Begrenzung der Schwenkbewegung der Schleifleistenanordnung variabel in Abhängigkeit der aktuellen Fahrzeugposition vorgebbar sind.

5. Fahrzeug nach einem der Ansprüche 1 bis 4, umfassend Sensormittel zur Erfassung einer seitlichen Fahrabweichung aus der Spurmitte der virtuellen Fahrspur, wobei das Fahrerassistenzsystem Ausgabemittel zur Ausgabe einer Fahrerinformation über die Fahrabweichung aufweist.

6. Fahrzeug nach Anspruch 5, wobei die Ausgabemittel dazu ausgebildet sind, eine variierende Fahrerinformation in Abhängigkeit der Größe der Fahrabweichung auszugeben.

7. Fahrzeug nach Anspruch 5 oder 6, wobei die Ausgabemittel an beiden Fahrzeugseiten angeordnete Lautsprecher aufweisen und dazu ausgebildet sind, die Fahrerinformation über Lautsprecher derjenigen Fahrzeugseite auszugeben, in deren Richtung die erfasste Fahrabweichung liegt.

8. Fahrzeug nach einem der Ansprüche 5 bis 7, wobei die Sensormittel dazu ausgebildet sind, die aktuelle seitliche Fahrabweichung anhand der Relativlage des Fahrzeugs zu Einrichtungen der Oberleitungsanlage zu erfassen.

9. Fahrzeug nach einem der Ansprüche 5 bis 8, wobei die Sensormittel dazu ausgebildet sind, die aktuelle seitliche Fahrabweichung anhand der Relativlage des Fahrzeugs zu Seitenmarkierungen des Fahrstreifens zu erfassen.

10. Fahrzeug nach einem der Ansprüche 1 bis 9, wobei die Schleifleistenanordnung seitlich abstehende Isolationshörner aufweist, die eine Sollbruchstelle aufweisen.

11. Fahrzeug nach Anspruch 10, wobei die Schleifleistenanordnung eine Detektionseinrichtung aufweist, die dazu ausgebildet ist, ein Abbrechen eines Isolationshorns zu detektieren und eine automatische Absenkung der Schleifleistenanordnung auszulösen.

12. Fahrzeug nach Anspruch 10 oder 11, wobei ein Isolationshorn durch ein Fangseil gesichert ist.
